# EUROPÄISCHE PATENTSCHRIFT

(11) **EP 3 036 150 B1**
(45) Veröffentlichungstag und Bekanntmachung des Hinweises auf die Patenterteilung: **04.12.2019**
(21) Anmeldenummer: 14750491.4
(22) Anmeldetag: 13.08.2014
(51) Int. Cl.: B62K 25/28, B62M 6/55

(54) **ZWEIRAD MIT GEFEDERTER TRIEBSATZSCHWINGE**
TWO WHEELER WITH DRIVE UNIT INCLUDING SWINGING ARM
DEUX-ROUES AVEC BRAS OSCILLANT MUNI D'UN DISPOSITIF DE PROPULSION

(30) Priorität: 23.08.2013 DE 102013216826
(43) Veröffentlichungstag der Anmeldung: 29.06.2016
(73) Patentinhaber: Bayerische Motoren Werke Aktiengesellschaft, 80809 München (DE)
(72) Erfinder: LOCH, Robert, 81379 München (DE); OCHNER, Udo, 85778 Haimhausen (DE); BACHMANN, Fabian, 80639 München (DE); BOBINGER, Robert, 86316 Hügelshart (DE)
(86) Internationale Anmeldenummer: PCT/EP2014/067291
(87) Internationale Veröffentlichungsnummer: WO 2015/024826

(56) Entgegenhaltungen:
- EP-A2- 1 582 450
- EP-A2- 2 228 290
- WO-A1-99/11513
- WO-A1-2012/027900
- JP-A- H08 258 781
- US-A- 5 452 910
- US-A- 5 813 683
- US-A1- 2005 057 018

## Beschreibung

Die Erfindung betrifft eine Rahmenanordnung für ein Zweirad gemäß dem Oberbegriff des Patentanspruchs 1, sowie ein mit einer entsprechenden Rahmenanordnung ausgestattetes Zweirad.

Aus der EP 1 582 450 B1 ist eine Fahrradantriebseinheit für ein Elektromotorunterstütztes Fahrrad, ein sogenanntes "PEDELEC", bekannt, die gefedert an einem Fahrradrahmen des Fahrrades angelenkt ist. Die Fahrradantriebseinheit umfasst eine Tretkurbel und eine Fahrradkette zum Übertragen eines mittels Muskelkraft des Fahrers erzeugten Drehmoments von der Tretkurbel auf das Hinterrad des Fahrrades. Unterstützt wird eine Bewegung der Tretkurbel durch einen motorbetätigten Antriebsmechanismus.

Die gesamte Rahmenanordnung weist eine Schwenkgelenkverbindung zwischen der Fahrradantriebseinheit und dem Fahrradrahmen mit einer definierten Schwenkachse auf, die durch ein Schwenklager gebildet wird, so dass die Fahrradantriebseinheit zusammen mit dem Tretlager gegenüber dem Rahmen schwenkbar ist. Bei einer Schwenkbewegung der Antriebseinheit um die starr ausgebildete Schwenkachse wird die beabstandet hierzu angeordnete Tretkurbel bei einem Einfeder- oder Ausfedervorgang der Fahrradantriebsanordnung derart mit verschwenkt, dass ein Abstand zwischen dem Sattel und dem Tretlager der Tretkurbel verändert wird. Da dieser Abstand an die Beinlänge des Fahrers angepasst sein sollte, führt der sich ändernde Abstand zu einer variierenden Anwinklung der Beine des Fahrers oder unter ungünstigen Bedingungen sogar zum Verlust eines Kontaktes zwischen Fuß und Pedal.

Dies bewirkt eine als störend wahrgenommene Komforteinbuße und stellt im Extremfall sogar eine zusätzliche Unfallgefahr dar.

Die EP 1 582 450 A2, US 5,452,910 A, WO2012/027900 A1, US 2005/0057018 A1 JP H08 258781 A1 und US 5,813,683 A zeigen derartige Fahrradantriebseinheiten.

Des Weiteren ist aus der EP 2 228 290 A2 eine mittels einem Mehrgelenk am Fahrradrahmen befestigte Hinterradaufhängung bekannt. Die WO 99/11513 A1 zeigt ein Klappfahrrad mit entsprechend faltbarer Rahmenanordnung.

Aufgabe dieser Erfindung ist es daher, eine gefederte Rahmenanordnung für ein Zweirad bereitzustellen, die einen jederzeit komfortablen und sicheren Betrieb des Zweirades ermöglicht.

Diese Aufgabe wird gelöst mit einer Rahmenanordnung für ein Zweirad mit den Merkmalen des Patentanspruchs 1 und mit einem Zweirad mit den Merkmalen des Patentanspruchs 9. Vorteilhafte Ausführungsformen ergeben sich aus den jeweils abhängigen Patentansprüchen.

Demnach wird eine Rahmenanordnung für ein Zweirad vorgeschlagen, insbesondere für ein Fahrrad, unter anderem mit
- einem Hauptrahmen, welcher ein Steuerrohr zum Verbinden mit einer Vorderradaufnahme und eine Sattelanbindung zum Verbinden mit einem Sattel umfasst, und
- einer schwenkbar mit dem Hauptrahmen verbundenen Triebsatzschwinge,
wobei die Triebsatzschwinge eine Radaufhängung für ein anzutreibendes Hinterrad sowie einen der Triebsatzschwinge zugeordneten Tretkurbelantrieb mit einer Tretkurbel zum Antreiben des Hinterrades mittels Muskelkraft eines Fahrers umfasst. Die Triebsatzschwinge ist mittels einer Mehrgelenkanordnung schwenkbar mit dem Hauptrahmen verbunden.

Die Rahmenanordnung kann also für ein Zweirad, wie beispielsweise ein Fahrrad, vorgesehen sein. Der Hauptrahmen als Teil der gesamten Rahmenanordnung ist derart ausgestaltet, dass über das Steuerrohr die Vorderradaufnahme, also beispielsweise eine ein- oder zweiarmige Vorderradgabel, lenkbar mit dem Hauptrahmen verbunden werden kann. Der Sattel ist mittels der Sattelanbindung ebenfalls mit dem Hauptrahmen verbindbar. Die Sattelanbindung kann beispielsweise eine direkte oder indirekte Verbindung zwischen Rahmen und Sattel vorsehen, oder ein Sattelrohr umfassen, über welches der Sattel mittels einer hierin eingreifenden separaten Sattelstütze, vorzugsweise höhenverstellbar, mit dem Hauptrahmen verbindbar ist.

Die Triebsatzschwinge beinhaltet für den Antrieb des Hinterrades den vollständigen Tretkurbelantrieb (einschließlich der Tretkurbel) und vereint diesen in einer gemeinsamen, funktionsintegrierten Antriebseinheit, welche als modulares Gesamtbauteil mit dem separat ausgebildeten Hauptrahmen schwenkbar verbunden ist.

Diese Ausgestaltung der Triebsatzschwinge als modulares Gesamtbauteil bietet die Möglichkeit, die Tretkurbel und eine das Hinterrad tragende Hinterradnabe mit stets gleichbleibendem Abstand zueinander anzuordnen, der sich auch bei einer Ein- oder Ausfederbewegung der Triebsatzschwinge nicht verändert. Auf diese Weise ist es möglich ein Übertragungsmittel, wie beispielsweise einen Ketten- oder Riementrieb, mit gleichbleibender Länge und konstanter Spannung vorzusehen. Auf separate Spannmittel kann daher verzichtet werden, wie sie ansonsten beispielsweise erforderlich wären, wenn die Tretkurbel dem Hauptrahmen zugeordnet wäre und sich in diesem Fall der Abstand der Tretkurbel aufgrund der Schwenkbewegung relativ zu der Hinterradnabe verändern würde.

Mit Hilfe der vorgeschlagenen Rahmenanordnung kann außerdem ein ansonsten bei dem Ein- oder Ausfedern auftretender Pedalschlag verhindert werden, der ebenfalls durch die Schwenkbewegung des Hinterrades bzw. der Schwinge auftritt und für den Fahrer unangenehm wahrnehmbar ist.

Die Ausführung der Triebsatzschwinge als modulares Gesamtbauteil ermöglicht außerdem eine unabhängige Vormontage sowie eine von der Ausgestaltung der restlichen Rahmenanordnung bzw. von dem restlichen Zweirad unabhängige Auslegung. Die Triebsatzschwinge ist somit auch für unterschiedlich ausgestaltete Rahmenanordnungen und -Größen einsetzbar.

Erfindungsgemäß ist die Triebsatzschwinge über die Mehrgelenkanordnung beweglich mit dem Hauptrahmen verbunden. Dies bedeutet, dass die Mehrgelenkanordnung als Bindeglied zwischen beiden Elementen dient und einerseits an dem Hauptrahmen und andererseits an der Triebsatzschwinge gelenkig angelenkt ist. Mit anderen Worten ist die Mehrgelenkanordnung über mindestens eines seiner Gelenke mit dem Hauptrahmen und über mindestens ein weiteres seiner Gelenke mit der Triebsatzschwinge derart drehbar verbunden, dass die beschriebene Schwenkbeweglichkeit der Triebsatzschwinge relativ zu dem Hauptrahmen bereitgestellt werden kann.

Zusätzlich ermöglicht die vorgeschlagene Verwendung der Mehrgelenkanordnung zur Verbindung der Triebsatzschwinge mit dem Hauptrahmen eine besonders vorteilhafte Schwenkbeweglichkeit, die besondere Freiheitsgrade bereitstellt.

Zusätzlich ist die Mehrgelenkanordnung derart ausgebildet, dass die Triebsatzschwinge relativ zu dem Hauptrahmen um eine virtuelle Schwenkachse verschwenkbar ist. Dies bedeutet, dass sich Einzelteile der Mehrgelenkanordnung zwar um deren definierte Drehgelenke mit drehbeweglich gelagerten "realen" Schwenkachsen drehen, die Triebsatzschinge in ihrer Gesamtheit jedoch um eine resultierende "virtuelle" bzw. effektive Schwenkachse geschwenkt wird, die nicht durch eine reale (also als reales Bauteil vorliegende) Achse definiert wird, sondern sich lediglich aus den jeweils einzelnen Schwenkbewegungen der Einzelteile des Mehrgelenks ergibt.

Vorzugsweise kann die Mehrgelenkanordnung hierzu eine Anzahl von Schwenkachsen umfasst, wobei die Schwenkachsen parallel beabstandet von der virtuellen Schwenkachse angeordnet sind. Somit besteht keine koaxiale Identität zwischen der virtuellen Schwenkachse und einer realen Schwenkachse eines Drehgelenks der Mehrgelenkanordnung.

Erfindungsgemäß ist die Mehrgelenkanordnung derart ausgebildet, dass die virtuelle Schwenkachse im Wesentlichen koaxial zu einer Tretlagerachse der Tretkurbel des Tretkurbelantriebs angeordnet ist. Dies bewirkt, dass einerseits bei einem Verschwenken der Triebsatzschwinge zwischen einer definierten Ausgangsposition und einer definierten maximal verschwenkten Endposition relativ zu dem Hauptrahmen eine Relativposition der virtuellen Schwenkachse bezüglich des Hauptrahmens im Wesentlichen ortsfest erhalten bleibt. Gleichzeitig liegt die ortsfeste Schwenkachse vorzugsweise auch koaxial zu der Tretlagerachse, so dass auch diese trotz einer Schwenkbewegung der Triebsatzschwinge ebenfalls ortsfest (bezüglich des Hauptrahmens) verbleibt. Für den Nutzer scheint der Tretkurbeldrehpunkt des Tretlagers analog zu einem gewöhnlichen Fahrrad ohne Hinterradschwinge festzustehen.

Als "ortsfest" ist eine unveränderliche Position der virtuellen Schwenkachse in Relation zu dem Hauptrahmen zu verstehen, unabhängig davon, in welcher Schwenkposition sich die Triebsatzschwinge gerade befindet.

Als "im Wesentlichen koaxial" soll neben einer vollständig koaxialen Anordnung aber auch eine im Vergleich zum betragsmäßigen Umfang der Schwenkbewegung vernachlässigbare Relativbewegung (bzw. eines entsprechenden Versatzes) der Tretlagerachse bezüglich der virtuellen Schwenkachse verstanden werden.

Beispielsweise kann die Mehrgelenkanordnung derart ausgebildet sein, dass ein Verschwenken der Triebsatzschwinge um die virtuelle Schwenkachse einen maximalen Versatz Δx einer Relativposition der Tretlagerachse bezüglich des Hauptrahmens in Längsrichtung x der Rahmenanordnung um maximal Δx = +/- 20mm, vorzugsweise maximal Δx = +/- 10mm, besonders bevorzugt maximal Δx = +/- 5mm, und/oder einen maximalen Versatz Δz in vertikaler Richtung z der Rahmenanordnung um maximal Δz +/-20mm, vorzugsweise Δz = +/-10mm, besonders bevorzugt um maximal Δz = +/- 4mm, bewirkt.

Dies ermöglicht, dass der im Vergleich zu dem Umfang der relativen Schwenkbewegung auftretende geringe Versatz des Tretlagers bezüglich des Hauptrahmens und damit gegenüber dem Nutzer beim Treten der Tretkurbel von diesem nicht wahrgenommen wird. Wird der Versatz darüber hinaus auf die bevorzugten bzw. die besonders bevorzugten Werte reduziert, so ist zusätzlich auch bei einer fehlenden Tretbewegung der Versatz für den Nutzer nicht wahrnehmbar, so dass einerseits ein Komfort, aber auch die Sicherheit des Nutzers deutlich gesteigert werden können.

Weiterhin ist die Mehrgelenkanordnung als Viergelenkanordnung ausgestaltet. Die Viergelenkanordnung ermöglicht bei entsprechender kinematischer Auslegung auf einfache und kompakte Weise die beschriebene Schwenkbeweglichkeit herzustellen. Selbstverständlich kann eine Kinematik mit mehr als vier Gelenken zur Bereitstellung einer vergleichbaren Schwenkbewegung vorgesehen werden.

Außerdem umfasst die vorgeschlagene Viergelenkanordnung zwei Schwenkelemente, wobei jedes der beiden Schwenkelemente mit einem jeweils ersten Abschnitt um jeweils eine erste Schwenkachse schwenkbar mit dem Hauptrahmen und mit jeweils einem von dem jeweiligen ersten Abschnitt beabstandet angeordneten zweiten Abschnitt um jeweils eine zweite Schwenkachse schwenkbar mit der Triebsatzschwinge verbunden ist. Jedes Schwenkelement ist also einerseits drehbeweglich an den Hauptrahmen und andererseits drehbeweglich an die Triebsatzschwinge angelenkt, so dass jedes Schwenkelement relativ zu dem Hauptrahmen sowie relativ zu der Triebsatzschwinge schwenkbar ist.

Mit anderen Worten ist die Triebsatzschwinge also mittels der beiden Schwenkelemente derart mit dem Hauptrahmen drehbeweglich verbunden, dass keine gemeinsame "reale" Schwenkachse zwischen der Triebsatzschwinge und dem Hauptrahmen vorgesehen werden muss, die beiden Bauteilen gemeinsam ist.

Des Weiteren umfasst die Rahmenanordnung außerdem eine Feder-Dämpfer-Anordnung zur Dämpfung der Schwenkbewegung der Triebsatzschwinge relativ zu dem Hauptrahmen.

Die Feder-Dämpfer-Anordnung ist mit einem ersten Ende mit der Triebsatzschwinge gekoppelt und mit einem entgegengesetzten zweiten Ende mittelbar oder unmittelbar an dem Hauptrahmen abgestützt.

Außerdem ist hierzu das erste Ende der Feder-Dämpfer-Anordnung mittels einer in eine Anzahl von definierten Positionen einstellbaren Halteanordnung zum definierten Variieren einer Länge der Feder-Dämpfer-Anordnung mit der Triebsatzschwinge gekoppelt. Auf diese Weise kann eine Länge der Feder-Dämpfer-Anordnung und damit deren Feder- und/oder DämpferCharakteristik eingestellt und variiert werden.

Zusätzlich ist das zweite Ende der Feder-Dämpfer-Anordnung mit einem der Schwenkelemente verbunden und über dieses an dem Hauptrahmen abgestützt.

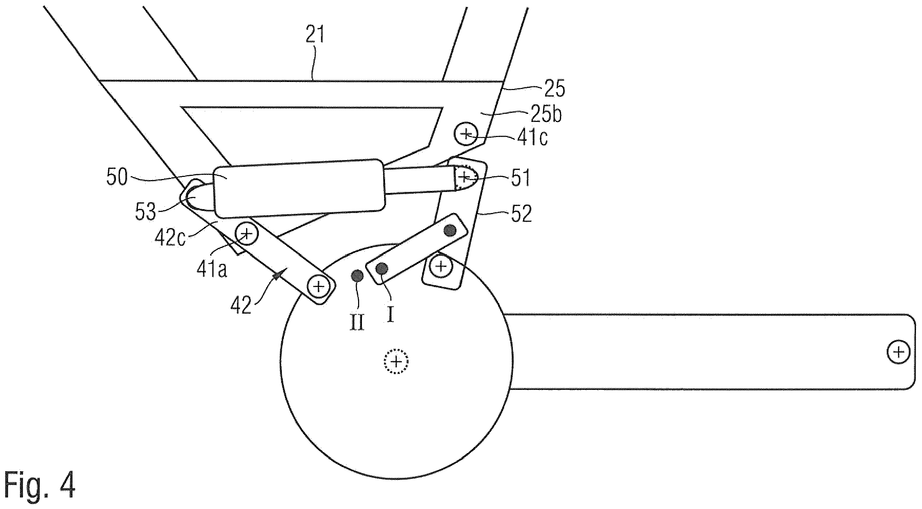

Entsprechend einer weiteren Ausführungsform umfasst der Hauptrahmen eine gabelförmige Aufnahme zum Verbinden der Mehrgelenkanordnung mit dem Hauptrahmen, wobei die Feder-Dämpfer-Anordnung innerhalb der gabelförmigen Aufnahme zwischen der Mehrgelenkanordnung und dem Hauptrahmen angeordnet ist. Die gabelförmige Aufnahme umfasst beispielsweise zwei Gabeln mit je zwei Gabelarmen, wobei an jeder Gabel der jeweils erste Abschnitt des jeweiligen Schwenkelements zwischen den beiden Gabelarmen drehbeweglich gelagert ist. Alternativ können - wie in Fig. 4 dargestellt - die jeweiligen Gabelarme beider Gabeln, welche auf ein und derselben Seite angeordnet sind, miteinander zu einem gemeinsamen Gabelarm pro Seite des Zweirades verbunden sein.

Zusätzlich kann die Feder-Dämpferanordnung zwischen der gabelförmigen Aufnahme und den Schwenkelementen angeordnet sein, so dass sich in diesem Fall eine besonders kompakte und platzsparende Gesamtanordnung ergibt.

Der Hauptrahmen kann verschiedene Formen aufweisen und beispielsweise ein oder mehrere Profilelemente umfassen. Insbesondere kann mindestens ein Profilabschnitt einen kreisrunden, ovalen, rechteckigen oder mehreckigen Querschnitt aufweisen. Als Material sind sowohl geeignete Metalle, aber auch Kunststoffe, insbesondere Faserverstärkte Kunststoffe mit geeignetem Fasermaterial zur Verstärkung, sowie alle sonstigen für einen Zweiradrahmen geeignete Werkstoffe einsetzbar. Als Fasermaterialien sind vorzugsweise Glasfasern, Kohlefasern, Aramidfasern und/oder andere geeignete Verstärkungsfasern nutzbar.

Entsprechend einer weiteren Ausführungsform umfasst die Triebsatzschwinge ein zumindest den Tretkurbelantrieb umschließendes Gehäuse zur Kapselung der Triebsatzschwinge gegenüber einer Umgebung. Die Triebsatzschwinge und die darin integrierten Komponenten des Tretkurbelantriebs können somit gegen äußere Einflüsse, wie Nässe und Verschmutzung, geschützt werden, so dass eine Reinigung und Wartung deutlich vereinfacht wird.

Entsprechend einer bevorzugten Ausführungsform umfasst die Triebsatzschwinge einen Hilfsmotor zum Antreiben des Hinterrades, wobei eine Rotorachse des Hilfsmotors koaxial zu einer Tretlagerachse der Tretkurbel des Tretkurbelantriebs angeordnet ist. Der Hilfsmotor kann beispielsweise als Elektromotor ausgeführt sein und für einen alleinigen Antrieb des Zweirades und/oder für einen den Nutzer beim Treten unterstützenden Antrieb ausgebildet sein.

Des Weiteren kann zumindest ein Teil eines Gehäuses des Hilfsmotors einstückig mit der Radaufhängung ausgeführt sein. Demnach ist es möglich das Gehäuse des Hilfsmotors oder einen Teil davon materialeinheitlich mit der Radaufhängung als ein gemeinsames einheitliches Bauteil herzustellen. Dies kann beispielsweise mittels eines bekannten und hierzu geeigneten Metall- oder Kunststoffgussverfahrens erfolgen.

Wie bereits beschrieben, kann der Tretkurbelantrieb ein Übertragungsmittel zum Übertragen eines Drehmoments von der Tretkurbel und/oder dem Hilfsmotor auf das Hinterrad des Zweirades umfassen, insbesondere eine Fahrradkette und/oder einen Zahnriemen. Dieses kann optional ebenfalls in dem Gehäuse der Triebsatzschwinge integriert sein.

Des Weiteren wird ein Zweirad, insbesondere ein Fahrrad oder ein Elektrofahrrad, bereitgestellt, wobei das Zweirad eine Rahmenanordnung gemäß der Beschreibung umfasst. Als Elektrofahrrad ist jedes Fahrrad mit einem elektrischen Antriebsmotor zu verstehen, also sowohl ein sogenanntes "E-Bike", welches einen Elektromotor zum alleinigen Antrieb des Rades umfasst, als auch ein sogenanntes "Pedelec", bei dem der Elektromotor durch ein Treten des Nutzers aktiviert wird und auf diese Weise dessen Bewegungen unterstützt.

Die Erfindung wird nachfolgend unter Bezugnahme auf die Zeichnungen anhand eines Ausführungsbeispiels näher erläutert. Es zeigen:
- Fig. 1: ein Zweirad gemäß der Beschreibung in schematischer Seitenansicht,
- Fig. 2: eine Detailansicht einer Rahmenanordnung des Zweirades aus Fig. 1 mit einer Hinterradschwinge in einer ersten Schwenkposition,
- Fig. 3: die Hinterradschwinge aus Fig. 2 in einer zweiten Schwenkposition, und
- Fig. 4: eine Detailansicht eines Feder-Dämpfer-Anordnung für das Zweirad aus Fig. 1.

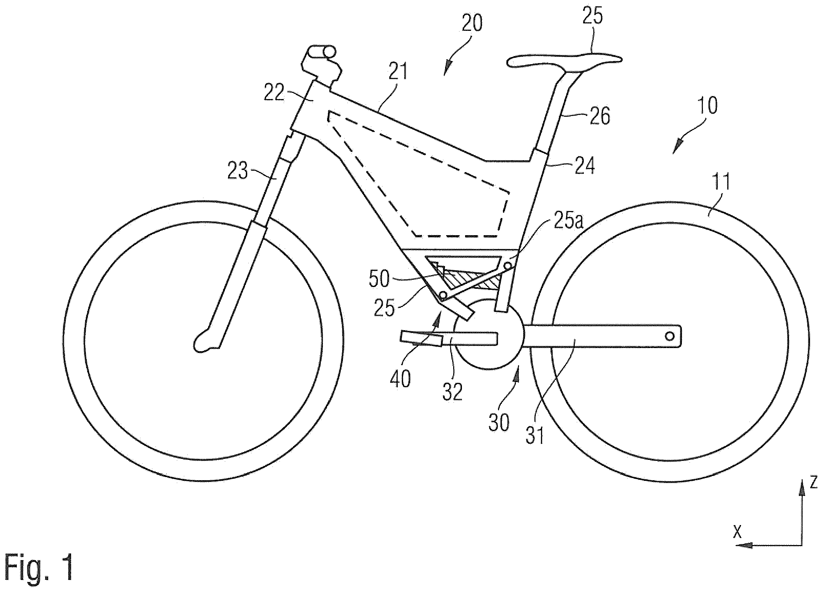

Die Fig. 1 zeigt ein Zweirad 10 gemäß der Beschreibung in schematischer Seitenansicht, wobei das Zweirad 10 insbesondere als Fahrrad oder Elektrofahrrad (E-Bike oder Pedelec) ausgeführt sein kann. Das Zweirad 10 weist eine Rahmenanordnung 20 auf, die unter anderem einen Hauptrahmen 21 umfasst. Der Hauptrahmen 21 kann verschiedene Formen aufweisen und ist in Fig. 1 lediglich schematisch angedeutet. Insbesondere kann der Hauptrahmen 21 ein oder mehrere Profilelemente mit beliebigem Querschnitt, vorzugsweise ein oder mehrere Rohrprofile, umfassen (nicht dargestellt).

An einem in Fahrtrichtung x weisenden vorderen Ende des Hauptrahmens 21 ist ein Steuerrohr 22 angeordnet, welches zum Verbinden mit einer Vorderradaufnahme 23, wie beispielsweise einer Vorderradgabel mit zwei Gabelarmen oder einer Radaufnahme mit lediglich einem Gabelarm, vorgesehen ist. Des Weiteren ist an dem Hauptrahmen 21 eine Sattelanbindung 24 zum Verbinden mit einem Sattel 25 bzw. mit einer den Sattel 25 tragenden Sattelstütze 26 angeordnet.

Das Zweirad 10 weist außerdem eine schwenkbar mit dem Hauptrahmen 21 verbundene Triebsatzschwinge 30 auf. Diese definiert eine kompakte und funktionsintegrierte Antriebseinheit und umfasst hierzu eine Radaufhängung 31 für ein anzutreibendes Hinterrad 11 sowie einen der Triebsatzschwinge 30 zugeordneten Tretkurbelantrieb mit einer Tretkurbel 32 zum Antreiben des Hinterrades 11 mittels Muskelkraft eines Fahrers. Zusätzlich ist die Triebsatzschwinge 30 in der dargestellten Ausführungsform mittels einer Viergelenkanordnung 40 schwenkbar mit dem Hauptrahmen 21 verbunden.

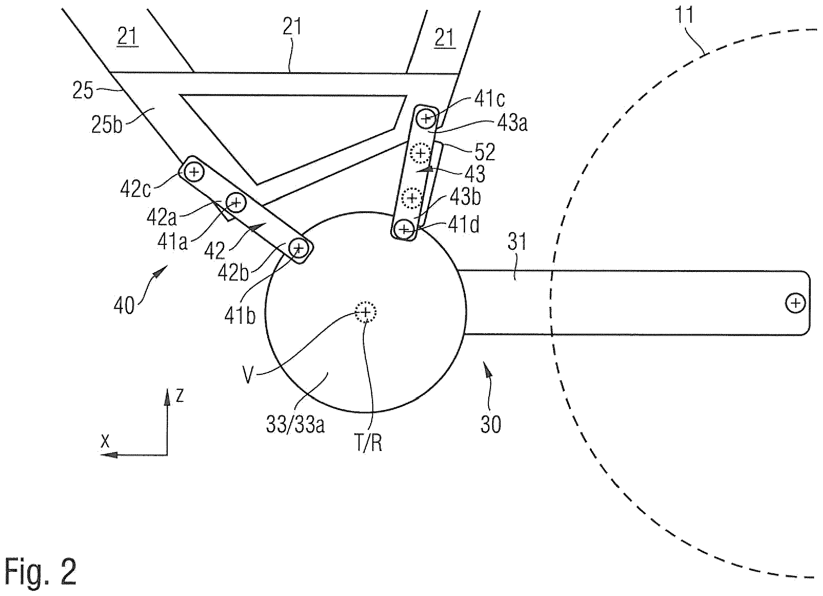

In Fig. 2 ist eine Detailansicht der Rahmenanordnung 20 des Zweirades 10 aus Fig. 1 mit der Triebsatzschwinge 30 in einer ersten Schwenkposition sowie der Viergelenkanordnung 40 dargestellt.

Die Viergelenkanordnung 40 ist derart ausgebildet, dass die Triebsatzschwinge 30 relativ zu dem Hauptrahmen 21 um eine virtuelle Schwenkachse V verschwenkbar ist.

Hierzu umfasst die Viergelenkanordnung 40 eine Anzahl von vier Schwenkachsen 41a-d, wobei die Schwenkachsen 41a-d parallel beabstandet von der virtuellen Schwenkachse V angeordnet sind, so dass die virtuelle Schwenkachse V nicht mit einer der vier Schenkachsen 41a-d des Viergelenks 40 koaxial zusammenfällt, sondern einen Abstand hierzu aufweist.

Diese Ausgestaltung ermöglicht es, die Viergelenkanordnung 40 derart auszubilden, dass die virtuelle Schwenkachse V im Wesentlichen koaxial zu einer Tretlagerachse T der Tretkurbel 32 des Tretkurbelantriebs angeordnet ist.

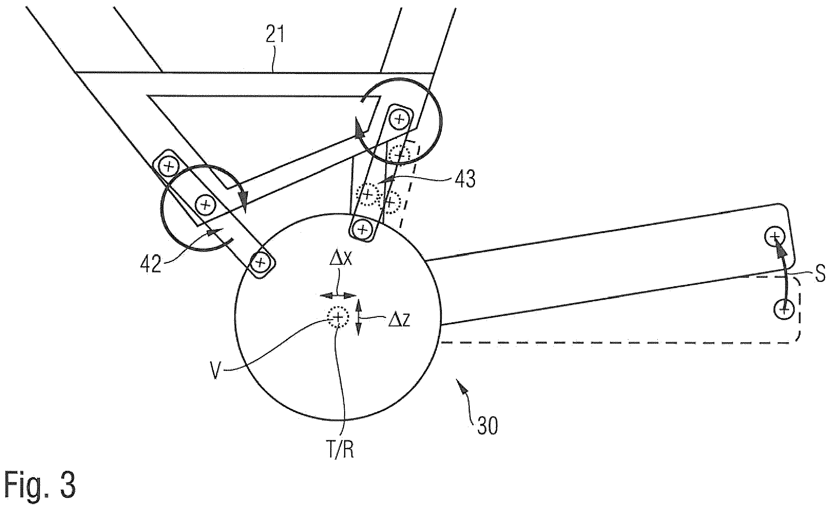

Dies bedeutet, dass die Viergelenkanordnung 40 derart ausgebildet ist, dass ein in Fig. 3 dargestelltes Verschwenken (Schwenkbewegung S) der Triebsatzschwinge 30 um die virtuelle Schwenkachse V einen maximalen Versatz Δx einer Relativposition der Tretlagerachse bezüglich des Hauptrahmens in Längsrichtung x der Rahmenanordnung 20 um maximal Δx = +/- 20mm, vorzugsweise maximal Δx = +/- 10mm, besonders bevorzugt maximal Δx = +/-5 mm, und/oder einen maximalen Versatz Δz in vertikaler Richtung z der Rahmenanordnung um maximal Δz = +/-20mm, vorzugsweise Δz = +/-10mm, besonders bevorzugt um maximal Δz = +/- 4mm, bewirkt.

Die Viergelenkanordnung 40 weist gemäß Fig. 2 zwei Schwenkelemente 42,43 auf, die jeweils mit einem ersten Abschnitt 42a,43a um eine jeweils erste der Schwenkachsen 41a,41c schwenkbar mit dem Hauptrahmen 21 und mit jeweils einem von dem jeweiligen ersten Abschnitt 42a,43a beabstandet angeordneten zweiten Abschnitt 42b,43b um jeweils eine zweite der Schwenkachsen 41b,d schwenkbar mit der Triebsatzschwinge 30 verbunden sind. Wie ebenfalls in Fig. 3 dargestellt, wird bei einer Schwenkbewegung S (dargestellt für eine Einfederbewegung, eine Ausfederbewegung ist in entgegengesetzter Richtung gerichtet) eine Schwenkbewegung der Schwenkelemente relativ zu dem Hauptrahmen 21 entgegen einer Drehrichtung der Schwenkrichtung S bewirkt, so dass die virtuelle Schwenkachse V bzw. die Tretlagerachse T lediglich um den jeweiligen beschriebenen maximalen Versatz verschoben und somit im Wesentlichen "ortsfest" bezüglich des Hauptrahmens 21 bleibt.

Zusätzlich kann die Triebsatzschwinge 30 einen Hilfsmotor 33 zum Antreiben des Hinterrades umfassen, wobei eine Rotorachse R des Hilfsmotors 33 koaxial zu der Tretlagerachse T der Tretkurbel 32 des Tretkurbelantriebs angeordnet ist. Dargestellt ist in Fig. 2 lediglich das Gehäuse 33a des Hilfsmotors 33. Optional kann zur Bereitstellung eines möglichst kompakten und modularen Aufbaus zumindest ein Teil des Gehäuses 33a des Hilfsmotors 33 einstückig mit der Radaufhängung 31 ausgebildet sein.

Auf die Darstellung eines Übertragungsmittels zum Übertragen eines Drehmoments von der Tretkurbel 32 bzw. dem Hilfsmotor 33 auf das Hinterrad 11 des Zweirades 10 wurde der Übersichtlichkeit halber verzichtet. Es versteht sich jedoch, dass ein entsprechendes Übertragungsmittel, wie beispielsweise ein Fahrradkette und/oder ein Zahnriemen entsprechend vorgesehen wird.

Ebenfalls nicht dargestellt ist die optionale Ausführungsform der Triebsatzschwinge 30 mit einem zumindest den Tretkurbelantrieb umschließenden Gehäuse zur Kapselung der Triebsatzschwinge gegenüber einer Umgebung.

In Fig. 4 ist eine Detailansicht einer Feder-Dämpfer-Anordnung 50 für das Zweirad 10 aus Fig. 1 dargestellt, welche die Rahmenanordnung 20 außerdem zur Dämpfung der Schwenkbewegung der Triebsatzschwinge 30 relativ zu dem Hauptrahmen 21 aufweist.

Die Feder-Dämpfer-Anordnung 50 ist mit einem ersten Ende 51 schwenkbar mit einer starr oder zumindest drehfest mit der Triebsatzschwinge 30 verbundenen Halteanordnung 52 mit der Triebsatzschwinge 50 gekoppelt sowie mit einem entgegengesetzten zweiten Ende 53 der Feder-Dämpfer-Anordnung 50 mit einem der Schwenkelemente 42 verbunden und über dieses mittelbar an dem Hauptrahmen 21 abgestützt. Hierzu umfasst das entsprechende Schwenkelement 42 einen zusätzlichen Verbindungsabschnitt 42c (vgl. auch Fig. 2).

Optional ist die Halteanordnung 52 verstellbar in einer Anzahl von verschiedenen Positionen I, II zum Einstellen einer Länge der Feder-Dämpfer-Anordnung verbindbar. Selbstverständlich können mehr als die beiden dargestellten Positionen I, II zur Einstellung vorgesehen werden.

Zusätzlich umfasst der Hauptrahmen 21 eine zweiarmige gabelförmige Aufnahme 25 zum Verbinden bzw. Anbinden der Viergelenkanordnung 40 mit dem Hauptrahmen 21, wobei die Feder-Dämpfer-Anordnung 50 in einer im Wesentlichen horizontaler Ausrichtung innerhalb der gabelförmigen Aufnahme 25 zwischen der Viergelenkanordnung 40 und dem Hauptrahmen 21 angeordnet ist. Beide Gabelarme 25a,b der gabelförmigen Aufnahme 25 liegen in der dargestellten Blickrichtung hintereinander parallel zu der Bildebene angeordnet, wobei die Feder-Dämpfer-Anordnung 50 zwischen den beiden Gabelarmen 25a,b angeordnet ist, so dass sich eine besonders kompakte und platzsparende Gesamtanordnung ergibt. Zur besseren bildlichen Darstellung der Feder-Dämpfer-Anordnung 50 ist jedoch in Fig. 4 lediglich der hintere der beiden Gabelarme 25b dargestellt. Aus Fig. 1 ist dagegen eine Darstellung erkennbar, in welcher der vordere Gabelarm 25a dargestellt ist und entsprechend die dahinterliegende Feder-Dämpfer-Anordnung 50 verdeckt.

## Patentansprüche

1. Rahmenanordnung für ein Zweirad, insbesondere für ein Fahrrad, mit
- einem Hauptrahmen (21), welcher ein Steuerrohr (22) zum Verbinden mit einer Vorderradaufnahme (23) und eine Sattelanbindung (24) zum Verbinden mit einem Sattel (25) umfasst, und
- einer schwenkbar mit dem Hauptrahmen (21) verbundenen Triebsatzschwinge (30), wobei die Triebsatzschwinge (30) eine Radaufhängung (31) für ein anzutreibendes Hinterrad (11) sowie einen der Triebsatzschwinge (30) zugeordneten Tretkurbelantrieb mit einer Tretkurbel (32) zum Antreiben des Hinterrades (11) mittels Muskelkraft eines Fahrers umfasst, und die Triebsatzschwinge (30) mittels einer Mehrgelenkanordnung (40) schwenkbar mit dem Hauptrahmen (21) verbunden ist, wobei die Mehrgelenkanordnung (40) derart ausgebildet ist, dass die Triebsatzschwinge (30) relativ zu dem Hauptrahmen (21) um eine virtuelle Schwenkachse (V) verschwenkbar ist, und die virtuelle Schwenkachse (V) im Wesentlichen koaxial zu einer Tretlagerachse (T) der Tretkurbel (32) angeordnet ist, und die Mehrgelenkanordnung (40) als Viergelenkanordnung ausgestaltet ist, welche zwei Schwenkelemente (42,43) umfasst, wobei jedes der beiden Schwenkelemente (42,43) mit einem jeweils ersten Abschnitt (42a,43a) um jeweils eine erste Schwenkachse (41a,41c) schwenkbar mit dem Hauptrahmen (21) und mit jeweils einem von dem jeweiligen ersten Abschnitt (42a,43a) beabstandet angeordneten zweiten Abschnitt (42b,43b) um jeweils eine zweite Schwenkachse (41b,41d) schwenkbar mit der Triebsatzschwinge (30) verbunden ist, wobei eine Schwenkbewegung (S) der Triebsatzschwinge (30) eine Schwenkbewegung der beiden Schwenkelemente (42,43) relativ zu dem Hauptrahmen (21) entgegen einer Drehrichtung der Schwenkrichtung (S) der Triebsatzschwinge (30) bewirkt wobei die Rahmenanordnung (20) außerdem eine Feder-Dämpfer-Anordnung (50) zur Dämpfung einer Schwenkbewegung der Triebsatzschwinge (30) relativ zu dem Hauptrahmen (21) umfasst, und die Feder-Dämpfer-Anordnung (50) mit einem ersten Ende (51) mit der Triebsatzschwinge (30) gekoppelt und mit einem entgegengesetzten zweiten Ende (53) mittelbar oder unmittelbar an dem Hauptrahmen (21) abgestützt ist,
**dadurch gekennzeichnet, dass**
das erste Ende (51) der Feder-Dämpfer-Anordnung (50) mittels einer in eine Anzahl von definierten Positionen (I, II) einstellbaren Haltevorrichtung (52) zum definierten Variieren einer Länge der Feder-Dämpfer-Anordnung (50) mit der Triebsatzschwinge (30) gekoppelt ist, und das zweite Ende (53) der Feder-Dämpfer-Anordnung (50) mit einem der Schwenkelemente (42) verbunden und über dieses an dem Hauptrahmen (21) abgestützt ist.

2. Rahmenanordnung nach Anspruch 1, **dadurch gekennzeichnet, dass** die Mehrgelenkanordnung (40) eine Anzahl von Schwenkachsen (41a-d) umfasst, wobei die Schwenkachsen (41a-d) parallel beabstandet von der virtuellen Schwenkachse (V) angeordnet sind.

3. Rahmenanordnung nach einem der Ansprüche 1 bis 2, **dadurch gekennzeichnet, dass** die Mehrgelenkanordnung (40) derart ausgebildet ist, dass ein Verschwenken der Triebsatzschwinge (30) um die virtuelle Schwenkachse (V) einen maximalen Versatz Δx einer Relativposition der Tretlagerachse (T) bezüglich des Hauptrahmens (21) in Längsrichtung x der Rahmenanordnung um maximal Δx = +/- 20mm, vorzugsweise maximal Δx = +/- 10mm, besonders bevorzugt maximal Δx = +/-5 mm, und/oder einen maximalen Versatz Δz in vertikaler Richtung z der Rahmenanordnung (20) um maximal Δz = +/-20mm, vorzugsweise Δz = +/-10mm, besonders bevorzugt um maximal Δz = +/- 4mm, bewirkt.

4. Rahmenanordnung nach einem der Ansprüche 1 bis 3, **dadurch gekennzeichnet, dass** der Hauptrahmen (21) eine gabelförmige Aufnahme (25) zum Verbinden der Mehrgelenkanordnung (40) mit dem Hauptrahmen (21) umfasst, wobei die Feder-Dämpfer-Anordnung (50) innerhalb der gabelförmigen Aufnahme (25) zwischen der Mehrgelenkanordnung (40) und dem Hauptrahmen (21) angeordnet ist.

5. Rahmenanordnung nach einem der Ansprüche 1 bis 4, **dadurch gekennzeichnet, dass** die Triebsatzschwinge (30) ein zumindest den Tretkurbelantrieb umschließendes Gehäuse zur Kapselung der Triebsatzschwinge gegenüber einer Umgebung umfasst.

6. Rahmenanordnung nach einem der Ansprüche 1 bis 5, **dadurch gekennzeichnet, dass** die Triebsatzschwinge (30) einen Hilfsmotor (33) zum Antreiben des Hinterrades (11) umfasst, wobei eine Rotorachse (R) des Hilfsmotors (33) koaxial zu einer Tretlagerachse (T) der Tretkurbel (32) des Tretkurbelantriebs angeordnet ist.

7. Rahmenanordnung nach Anspruch 6, **dadurch gekennzeichnet, dass** zumindest ein Teil eines Gehäuses (33a) des Hilfsmotors (33) einstückig mit der Radaufhängung (31) ausgebildet ist.

8. Rahmenanordnung nach einem der Ansprüche 1 bis 7, **dadurch gekennzeichnet, dass** der Tretkurbelantrieb ein Übertragungsmittel zum Übertragen eines Drehmoments von der Tretkurbel und/oder dem Hilfsmotor (33) auf das Hinterrad (11) des Zweirades (10) umfasst, insbesondere eine Fahrradkette und/oder einen Zahnriemen.

9. Zweirad, insbesondere Fahrrad oder Elektrofahrrad, **dadurch gekennzeichnet, dass** das Zweirad (10) eine Rahmenanordnung gemäß einem der Ansprüche 1 bis 8 umfasst.

## Claims

1. A frame assembly for a two-wheeled vehicle, especially for a bicycle, with
- a main frame (21), which comprises a head tube (22) for connecting with a front-wheel mount (23), and a saddle attachment means (24) for connecting with a saddle (25), and
- a drive-train swing arm (30) connected in pivotable manner with the main frame (21), wherein the drive-train swing arm (30) comprises a wheel suspension (31) for a rear wheel (11) which is to be driven and also a pedal-crank drive, associated with the drive-train swing arm (30), with a pedal crank (32) for driving the rear wheel (11) by means of the muscle power of a rider, and the drive-train swing arm (30) is connected in pivotable manner to the main frame (21) by means of a multi-bar linkage arrangement (40), wherein the multi-bar linkage arrangement (40) is formed in such a way that the drive-train swing arm (30) is pivotable relative to the main frame (21) about a virtual pivot axis (V), and the virtual pivot axis (V) is arranged substantially coaxially with a bottom-bracket bearing axis (T) of the pedal crank (32), and the multi-bar linkage arrangement (40) is configured as a four-bar linkage arrangement which comprises two pivot elements (42, 43), wherein each of the two pivot elements (42, 43) is connected with the main frame (21) by in each case a first portion (42a, 43a) in a pivotable manner about in each case a first pivot axis (41a, 41c), and with the drive-train swing arm (30) by in each case a second portion (42b, 43b), arranged spaced apart from the respective first portion (42a, 43a), in a pivotable manner about in each case a second pivot axis (41b, 41d), wherein a pivoting movement (S) of the drive-train swing arm (30) brings about a pivoting movement of the two pivot elements (42, 43) relative to the main frame (21) counter to a direction of rotation of the pivoting direction (S) of the drive-train swing arm (30), wherein the frame assembly (20) furthermore comprises a spring/damper arrangement (50) for damping a pivoting movement of the drive-train swing arm (30) relative to the main frame (21), and the spring/damper arrangement (50) is coupled with a first end (51) to the drive-train swing arm (30) and is supported with an opposed second end (53) indirectly or directly on the main frame (21),
**characterised in that** the first end (51) of the spring/damper arrangement (50) is coupled by means of a holding device (52) which can be set in a number of defined positions (I, II) for varying a length of the spring/damper arrangement (50) in defined manner with the drive-train swing arm (30), and the second end (53) of the spring/damper arrangement (50) is connected with one of the pivot elements (42) and is supported thereby on the main frame (21).

2. A frame assembly according to Claim 1, **characterised in that** the multi-bar linkage arrangement (40) comprises a number of pivot axes (41a-d), the pivot axes (41a-d) being arranged in parallel spaced apart from the virtual pivot axis (V).

3. A frame assembly according to one of Claims 1 to 2, **characterised in that** the multi-bar linkage arrangement (40) is formed in such a way that pivoting of the drive-train swing arm (30) about the virtual pivot axis (V) effects a maximum offset Δx of a relative position of the bottom-bracket bearing axis (T) with respect to the main frame (21) in the longitudinal direction x of the frame assembly by at most Δx = +/- 20 mm, preferably at most Δx = +/- 10 mm, especially preferably at most Δx = +/-5 mm, and/or a maximum offset Δz in the vertical direction z of the frame assembly (20) by at most Δz = +/-20 mm, preferably Δz = +/-10 mm, especially preferably by at most Δz = +/-4 mm.

4. A frame assembly according to one of Claims 1 to 3, **characterised in that** the main frame (21) comprises a fork-shaped mount (25) for connecting the multi-bar linkage arrangement (40) with the main frame (21), the spring/damper arrangement (50) being arranged within the fork-shaped mount (25) between the multi-bar linkage arrangement (40) and the main frame (21).

5. A frame assembly according to one of Claims 1 to 4, **characterised in that** the drive-train swing arm (30) comprises a housing which encloses at least the pedal-crank drive for encapsulating the drive-train swing arm relative to its surroundings.

6. A frame assembly according to one of Claims 1 to 5, **characterised in that** the drive-train swing arm (30) comprises an auxiliary motor (33) for driving the rear wheel (11), a rotor axis (R) of the auxiliary motor (33) being arranged coaxially to a bottom-bracket bearing axis (T) of the pedal crank (32) of the pedal-crank drive.

7. A frame assembly according to Claim 6, **characterised in that** at least part of a housing (33a) of the auxiliary motor (33) is formed in one piece with the wheel suspension (31).

8. A frame assembly according to one of Claims 1 to 7, **characterised in that** the pedal-crank drive comprises a transmission means for transmitting a torque from the pedal crank and/or the auxiliary motor (33) to the rear wheel (11) of the bicycle (10), especially a bicycle chain and/or a toothed belt.

9. A two-wheeled vehicle, especially bicycle or electric bicycle, **characterised in that** the two-wheeled vehicle (10) comprises a frame assembly according to one of Claims 1 to 8.

## Revendications

1. Agencement de cadre destiné à un deux roues, en particulier à un vélo comprenant :
un cadre principal (21) qui comporte un tube de direction (22) destiné à être relié à un logement de réception de la roue avant (23) et une connexion de selle (24) destinée à être reliée à une selle (25), et
un ensemble de propulsion oscillant (30) relié en pouvant pivoter au cadre principal (21), l'ensemble de propulsion oscillant (30) comprenant une suspension (31) pour la roue arrière d'entraînement (11) ainsi qu'un entraînement à pédalier associé à l'ensemble de propulsion oscillant (30) comprenant un pédalier (32) permettant d'entraîner la roue arrière (11) par la force musculaire d'un conducteur, et l'ensemble de propulsion oscillant (30) étant relié en pouvant pivoter au cadre principal (21) au moyen d'un dispositif à multiples articulations (40), le dispositif à multiples articulations (40) étant réalisé de sorte que l'ensemble de propulsion oscillant (30) puisse pivoter par rapport au cadre principal (21) autour d'un axe de pivotement virtuel (V) et l'axe de pivotement virtuel (V) étant essentiellement coaxial à l'axe (T) du pédalier (32), le dispositif à multiples articulations (40) étant réalisé sous la forme d'un dispositif à quatre articulations comportant deux éléments pivotants (42, 43), chacun des deux éléments pivotants (42, 43) étant articulé sur le cadre principal (21) autour d'un premier axe de pivotement respectif (41a, 41c) par un premier segment respectif (42a, 43a) et étant articulé sur l'ensemble de propulsion oscillant (30) autour d'un second axe de pivotement respectif (41b, 41d) par un second segment respectif (42b, 43b) situé à distance du premier segment respectif (42a, 43a), un mouvement de pivotement (S) de l'ensemble de propulsion oscillant (30) entraînant un mouvement de pivotement des deux éléments pivotants (42, 43) par rapport au cadre principal (21) dans la direction opposée à la direction du mouvement de pivotement (S) de l'ensemble de propulsion oscillant (30), le dispositif de cadre (20) comprenant en outre un dispositif d'amortissement à ressort (50) permettant d'amortir un mouvement de pivotement de l'ensemble de propulsion oscillant (30) par rapport au cadre principal (21), et le dispositif d'amortissement à ressort (50) étant couplé par une première extrémité (51) à l'ensemble de propulsion oscillant (30) et s'appuyant directement ou indirectement sur le cadre principal (21) par sa seconde extrémité (53) opposée à la première extrémité (51),
**caractérisé en ce que**
la première extrémité (51) du dispositif d'amortissement à ressort (50) est couplée à l'ensemble de propulsion oscillant (30) au moyen d'un dispositif de retenue (52) pouvant être réglé dans plusieurs positions définies (I, II) pour permettre de faire varier de manière définie la longueur du dispositif d'amortissement à ressort (50) et la seconde extrémité (53) du dispositif d'amortissement à ressort (50) est reliée à l'un des éléments pivotants (42) et s'appuie par l'intermédiaire de celui-ci sur le cadre principal (21).

2. Dispositif de cadre conforme à la revendication 1,
**caractérisé en ce que**
le dispositif à multiples articulations (40) comporte plusieurs axes de pivotement (41a-d), ces axes de pivotement (41a-d) étant situés parallèlement à distance de l'axe de pivotement virtuel (V).

3. Dispositif de cadre conforme à l'une des revendications 1 et 2, **caractérisé en ce que**
le dispositif à multiples articulations (40) est réalisé de sorte qu'un pivotement de l'ensemble de propulsion oscillant (30) autour de l'axe de pivotement virtuel (V) entraîne un décalage maximum Δx de la position relative de l'axe du pédalier (T) par rapport au cadre principal (21) dans la direction longitudinale x du dispositif de cadre égal à Δx maximum = +/- 20 mm, de préférence à Δx maximum = +/- 10 mm, et de façon particulièrement préférentielle à Δx maximum = +/- 5 mm, et/ou un décalage maximum Δz dans la direction verticale z du dispositif de cadre (20) égal à Δz maximum = +/- 20 mm, de préférence à Δz maximum = +/- 10 mm, et de façon particulièrement préférentielle à Δz maximum = +/- 4 mm.

4. Dispositif de cadre conforme à l'une des revendications 1 à 3, **caractérisé en ce que**
le cadre principal (21) comporte un logement de réception en forme de fourche (25) destiné à relier le dispositif à multiples articulations (40) avec le cadre principal (21), le dispositif d'amortissement à ressort (50) étant monté à la partie interne du logement de réception en forme de fourche (25), entre le dispositif à multiples articulations (40) et le cadre principal (21).

5. Dispositif de cadre conforme à l'une des revendications 1 à 4, **caractérisé en ce que**
l'ensemble de propulsion oscillant (30) comporte un boîtier entourant au moins l'entraînement à pédalier permettant d'encapsuler cet ensemble vis-à-vis de l'environnement.

6. Dispositif de cadre conforme à l'une des revendications 1 à 5, **caractérisé en ce que**
l'ensemble de propulsion oscillant (30) comporte un moteur auxiliaire (33) pour permettre d'entraîner la roue arrière (11), l'axe du rotor (R) du moteur auxiliaire (33) étant installé coaxialement à l'axe (T) du pédalier (32) de l'entraînement à pédalier.

7. Dispositif de cadre conforme à la revendication 6,
**caractérisé en ce qu'**
au moins une partie du boîtier (33a) du moteur auxiliaire (33) est réalisée en une seule pièce avec la suspension de roue (31).

8. Dispositif de cadre conforme à l'une des revendications 1 à 7, **caractérisé en ce que**
l'entraînement à pédalier comporte des moyens de transmission permettant de transmettre un couple de rotation du pédalier et/ou du moteur auxiliaire (33) à la roue arrière (11) du deux roues (10), en particulier une chaîne de vélo et/ou une courroie dentée.

9. Deux roues, en particulier vélo ou vélo électrique,
**caractérisé en ce qu'**
il comporte un dispositif de cadre conforme à l'une des revendications 1 à 8.
